Europäisches Patentamt

European Patent Office

Office européen des brevets

(11) Publication number: **0 254 164**
**A1**

## (12) EUROPEAN PATENT APPLICATION

(21) Application number: **87110019.4**

(22) Date of filing: **10.07.87**

(51) Int. Cl.4: **C09D 5/16** , C09D 5/46 , C09D 5/03

(30) Priority: **11.07.86 US 884585**

(43) Date of publication of application:
**27.01.88 Bulletin 88/04**

(84) Designated Contracting States:
**CH DE FR GB IT LI**

(71) Applicant: **THE PERKIN-ELMER CORPORATION**
**761 Main Avenue**
**Norwalk Connecticut 06859-0181(US)**

(72) Inventor: **Rotolico, Anthony J.**
**1 Sparrow Lane**
**Hauppage, NY 1177788(US)**
Inventor: **Kushner, Burton A.**
**23 East Park Drive**
**Old Bethpage, NY 11804(US)**
Inventor: **Florant, Hildreth G.**
**103 Marvin Avenue**
**Hempstead, NY 11550(US)**
Inventor: **Spaulding, Mark F.**
**6 Taylor Commons**
**Yaphank, NY 11967(US)**

(74) Representative: **Patentanwälte Grünecker,**
**Kinkeldey, Stockmair & Partner**
**Maximilianstrasse 58**
**D-8000 München 22(DE)**

(54) **Thermal spray powder for antifouling coating.**

(57) A composite thermal spray powder is disclosed which comprises granules formed of heat-softenable resin and a pulverant mineral such as copper or copper oxide that is toxic to marine organisms. The pulverant mineral should have a specific surface area greater that 0.05 $m^2$/gm and is preferably in the form of flakes.

Xerox Copy Centre

## THERMAL SPRAY POWDER FOR ANTIFOULING COATING

This invention relates to a thermal spray powder for producing an antifouling coating on an underwater surface of a marine structure, to a process for producing such a coating and to a marine structure having such a coating.

### Background of the Invention

Thermal spraying, also known as flame spraying, involves the heat softening of a heat fusible material such as metal or ceramic, and propelling the softened material in particulate form against a surface which is to be coated. The heated particles strike the surface where they are quenched and bonded thereto. A conventional thermal spray gun is used for the purpose of both heating and propelling the particles. In one type of thermal spray gun, the heat fusible material is supplied to the gun in powder form. Such powders are typically comprised of small particles, e.g., between 100 mesh U. S. Standard screen size (149 microns) and about 5 microns.

A thermal spray gun normally utilizes a combustion or plasma flame to produce the heat for melting of the powder particles. It is recognized by those of skill in the art, however, that other heating means may be used as well, such as electric arcs, resistance heaters or induction heaters, and these may be used alone or in combination with other forms of heaters. In a powder-type combustion thermal spray gun, the carrier gas, which entrains and transports the powder, can be one of the combustion gases or an inert gas such as nitrogen, or it can be simply compressed air. In a plasma spray gun, the primary plasma gas is generally nitrogen or argon. Hydrogen or helium is usually added to the primary gas. The carrier gas is generally the same as the primary plasma gas, although other gases, such as hydrocarbons, may be used in certain situations.

The material alternatively may be fed into a heating zone in the form of a rod or wire. In the wire type thermal spray gun, the rod or wire of the material to be sprayed is fed into the heating zone formed by a flame of some type, such as a combustion flame, where it is melted or at least heat-softened and atomized, usually by blast gas, and thence propelled in finely divided form onto the surface to be coated. The rod or wire may be conventionally formed as by drawing, or may be formed by sintering together a powder, or by bonding together the powder by means of an organic binder or other suitable binder which disintegrates in the heat of the heating zone, thereby releasing the powder to be sprayed in finely divided form.

Certain metals and oxides thereof such as copper and copper oxide are well known as constituents in coatings, or even as structural components, that are resistant to growth of marine organisms. Such "antifouling" coatings are used to prevent or reduce attachment and buildup of barnacles, shellfish, algae, grass, seaweed and the like on underwater surfaces of boats, ships, docks, pilings, drillings rigs, piping and other such marine structures.

Paints are commonly used containing pigments of copper or copper oxide or other components that are toxic to marine life of the type that may grow on marine structures. Some paints are quite effective but they all have relatively short useful lives. Thus boats are hauled and repainted frequently, such as annually, or at least after just a few years. Permanent structures such as dock pilings, oil rigs and pipes cannot be permanently protected and must be cleaned underwater. These and other problems, such as resistance to abrasion, are considered serious and very costly in the respective industries.

Copper coatings for such applications as electrical conductance have long been applied by thermal spraying including combustion wire, arc wire, combustion powder and plasma spraying processes. However, thermal sprayed copper has not been particularly successful on underwater structures for several practical reasons. On metal components such as steel ship hulls and pilings a galvanic action between the copper and iron causes rapid failure of the bonding. Since thermal sprayed material is generally porous it is virtually impossible to prevent such action, particularly in ocean saltwater.

Attempts to thermal spray copper onto organic surfaces such as wood, fiberglass-resin composites or steel coated with paint have also been unsuccessful. As thermal spraying involves the application of molten metal, the hot spray material causes charring or other degradation of the organic surface during application.

Several solutions have been proposed and have been available for more than a dozen years without significant commercial success. Several are described in Metco Application Bulletin No. 9619.281 dated 14 February 1973. One is a mold transfer technique in which copper is sprayed onto a mold, resin bonded fiberglass is laid up over the copper and the composite is then removed from the mold. This technique cannot, of course, be used on existing structures. Another solution involves applying a coating of resin prior to thermal spraying the copper, which improves bonding but still suffers from low bond strength and the problem of interface degradation.

In a further proposal, presented in the above-mentioned Bulletin, copper powder is blended with epoxy resin powder and the blend is thermal sprayed onto a fiberglass structure. The copper powder is taught therein as Metco 55 which is a substantially spherical powder of size between about -170 and +325 mesh, and 5 to 10% by weight resin is contained in the powder. This corresponds to about 25 to 60 % by volume of resin.

Although copper-containing coatings on fiberglass composites are thereby obtained with such a mixture, the proportion of copper in the coatings is low because of the difference in heating requirements for thermal spraying each of the constituents copper and resin. Spray parameters that produce low enough heat to melt and spray the epoxy without degradation are not sufficient to effectively melt the copper, resulting in lesser amounts of copper in the coating and reduced coating cohesion. Increasing the amount of copper merely results in even lower deposit efficiency (i.e., the proportion of spray material deposited). Also, in a blend of ordinary type powders, the surface area of copper available for the antifouling role is less than desirable.

In U. S. Patent No. 3,476,577 copper oxide is incorporated in glass granules which are blown and stick onto a soft undercoating of resin. Coatings are inherently porous and, at best, a monolayer is formed.

In U. S. Patent No. 4,521,475 the bonding problem is approached by thermal spraying an undercoat of small hollow glass or ceramic spheres incorporated in a resin. Copper is thermal sprayed over this undercoat.

U. S. Patent No. 3,321,329 discloses the flame spraying of epoxy with pigment and filler powders onto road surfaces. The epoxy is either a liquid or a solid mixed with the other ingredients.

U. S. Patent No. 4,388,373 teaches a flame sprayable composition for coating a plastic substrate, comprising a flame sprayable mineral powder, a nylon powder and an epoxy resin powder. Examples for the mineral powder are bronze, nickel chromium and austenitic stainless steel. Flame sprayed coatings of the composition are suggested for bonding other materials or for wear resistance purposes.

In view of the foregoing a primary object of the present invention is to provide a novel thermal spray material for producing antifouling coatings on an underwater surface of a marine structure, characterized by high adhesion, cohesion and antifouling properties.

A further object is to provide an improved thermal spray process for producing antifouling coatings.

An additional object is to provide a marine structure having an underwater surface with an novel antifouling coating.

## Summary of the Invention

The foregoing and other objects are achieved by a composite thermal spray powder according to the present invention which comprises granules formed of heat-softenable resin and a pulverant mineral such as copper, copper alloy or copper oxide that is toxic to marine organisms. The pulverant mineral should have a specific surface area greater than 0.6 m²/gm and is preferably in the form of flakes.

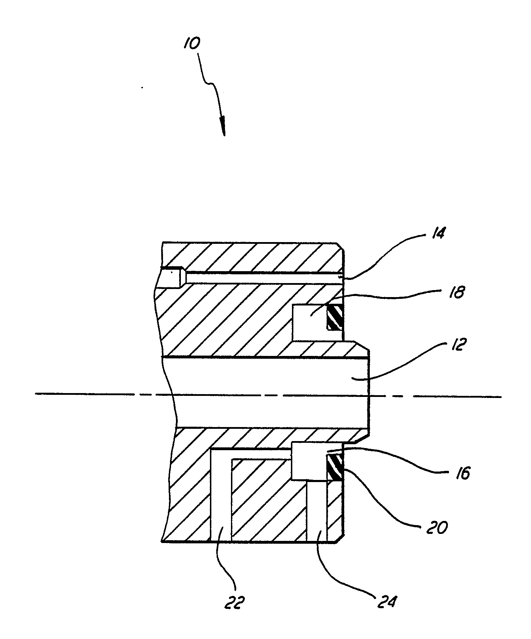

## Brief Description of the Drawing

The drawing is a sectional side view of a portion of a nozzle used for thermal spraying powder of the present invention.

## Detailed Description of the Invention

According to the present invention a composite powder of a mineral component and resin has been developed for thermal spraying onto organic and inorganic surfaces by conventional thermal spray techniques. The mineral component comprises copper, copper alloy, copper oxide or other metal or metal compound that is toxic to the type of marine organisms that attach to boat hulls, underwater pilings and the like. The copper may be in the form of an alloy, for example copper-nickel alloy containing at least 65% (by weight) copper. Such an alloy is quite resistant to corrosion and abrasion, as well as being toxic to marine organisms. The resin should be present in an amount between about 10% and about 70% by volume, preferably between about 40% and about 50%.

Further according to the present invention, the mineral component is in a pulverant form. As used herein and in the claims, "pulverant" refers to a powder form of such fineness or morphology that it has a particularly high surface area with respect to its mass. In particular the specific surface area of the mineral powder should be greater than about 0.05 m²/gm, and preferably greater than 0.1 m²/gm, as measured by the BET method (ASTM C819-77). In the case of a metal such as copper the pulverant mineral is preferably in the form of flakes of size smaller than 325 mesh, most preferably between -325 mesh and +1 micron. As distinguished from ordinary powder, flakes have a morphology that is quite flat, i.e., thin in one dimension compared with the other two dimensions. The flakes are characterized by relatively high surface area compared with that of ordinary powder used for producing thermal spray materials including composite materials.

However, the pulverant mineral in accordance with the present invention simply may be of such fineness as to have the requisite surface area set forth above. Such may be the case where the mineral is a compound such as copper oxide that cannot readily be shaped as flakes. Dust-like copper oxide powder finer than 1 micron, including loosely coherent agglomerates of such powder, is generally satisfactory for the purpose.

The resin component of the composite powder of the present invention may be any heat-softenable thermal-sprayable organic material. Examples are polyester resins, polyamide (nylon), polyimide, polyethylene, polycarbonate, epoxies, and combinations including mixtures such as polyamide-epoxy and polyester-polyimide. By "heat-softenable" it is meant that the resin will heat-soften or melt in the flame or hot gas of the thermal spray process. However, preferably at least a portion of the resin is additionally of the type that cures or thermosets during the spraying and coating process, so that resulting coating contains at least a semi-cured resin for optimum bonding and hardness.

An especially desirable resin is a mixture of polyamide (nylon) and epoxy, as taught in aforementioned U. S. Patent No. 4,388,373. These two polymers are desirably present in approximately equal quantities, e.g., in ratio between about 60:40 and 40:60 by volume. Thus a preferable powder contains about 20% to 25% epoxy and 20% to 25% nylon, by volume, most preferably with balance copper flakes (plus binder).

The nylon powder can be nylon 6, 6/6, 6/10 or 6/12 or a thermoplastic polyamide-polyimide although nylon 11 and/or nylon 12 are particularly suitable. Copolymers are also permissible. The melting point of the polymer is advantageously above about 120° C. and preferably above about 150° C. The melting point and curing temperature of the epoxy resin are advantageously above about 100°C. and preferably above about 120°C. Epoxy polymers with can be employed include condensation products of bis-phenol-A and epichlorohydrin which can be cross-linked with polyfunctional agents such as di-carboxylic acids or anhydrides, diamines, or the like. Representative epoxy resins are described in Encyclopedia of Polymer Science and Technology by Mark et al Vol. 6 (1967) pages 213 to 219 and cross-linking curing agents are described at pages 222 to 238, the disclosures of which are incorporated herein by reference.

The composite powder of resin and mineral may be formed by utilizing the resin as a binder for the mineral. For example a resin such as thermoplastic polyethylene, polyester or polyamide may be melted in a container, the mineral powder added, and the mass cooled and then crushed and screened to the required size powder.

Preferably the powder is formed by agglomerating a powder of the resin component with the pulverant mineral, using an additional material as a binder. In such case the resin powder should have a size less than -325 mesh and preferably between about -325 microns and +1 micron. The agglomeration may be by any known or desired method, such by a spray drying process as taught in U.S. Patent No. 3,617,358 which also discloses suitable binders for spray dry formation of thermal spray powders.

A preferred method of making the composite with a binder is by mixing the ingredients including the binder in a pot while allowing the binder to dry and set, which will result in a fairly free-flowing power. The binder material may be any known or conventional binding material which may be used for forming a coating or binding particles together or to a surface. The binder is preferably organic and may be a varnish containing a resin as the varnish solids, or may contain a resin which does not depend on solvent evaporation in order to form a cured or set film. The binder thus may contain a catalyzed resin as the varnish solids. Examples of binders which may be used include the conventional phenolic, epoxy or alkyd varnishes, varnishes containing drying oils, such as tung oil and linseed oil, rubber and latex binders and the like. The binder may alternatively be of the water-soluble type, as for example, of the polyvinylpyrrolidone or polyvinylalcohol type. In addition to organic binders, inorganic binders may be used, such as sodium silicate, boric acid, borax, magnesium or other soluble carbonates, nitrates, oxalates or oxychlorides, or colloidal suspensions containing oxides.

The final powder should have a size generally between -100 mesh (U.S. standard screen size) and +5 microns and preferably between -170 mesh and +325 mesh. The constituent powders, in addition to the size limitations set forth above, should be substantially finer than the final powder to form a fairly homogeneous composite.

The spraying is effected in the conventional manner for low melting point thermal spray materials. A combustion gun with propane, methane, natural gas or the like, with air, or oxygen support for the combustion gas, plus additional air into the flame, is particularly suitable. A plasma gun may be used if operated at low enthalpy. A conventional thermal spray powder feeder supplying powder in a carrier gas such as nitrogen is suitable.

The material is particularly suitable for spraying onto plastic surfaces, although it may be used to coat wood, concrete, painted metal or even bare metal; i.e.; virtually wherever antifouling is desired for an underwater marine environment. Typical applications are boats, ships, barges, docks, pilings, pylons, casings, pipes.

Due to a self-bonding characteristic, special surface preparation other than good cleaning is not required, though, of course, conventional surface preparation such as grit blasting should be utilized to maximize tenacity of the coating to the substrate surface. In the case of a metal surface, it is desirable to first coat such surface with a standard type of paint or a thermal sprayed plastic in order to provide a barrier to water penetration and electrical conductivity to prevent or at least minimize electrolytic effects between the metal and the mineral of the thermal sprayed coating. Preferably a curable type of primer paint is used, such as Metcoseal (TM) PR sold by the Metco Division of The Perkin-Elmer Corporation. A high hardness type of paint contributes to excellent bonding of the composite of the present invention, and such primers contain a pacifier that inhibits corrosion of the metal surface. The powder of the present invention is especially suited to coating such a paint, due to the bonding characteristic, to surfaces of organic material.

Fiberglass-plastic composites such as for boat hulls generally have a surface layer of polyester "gelcoat". The gloss of this surface as well as any remnant wax and other contamination should be removed before thermal spraying. A desirable means for preparing a gelcoat surface is by compressed air grit blasting with granules of crushed, organic hard material, for example with a vickers hardness of at least 25 (measured before crushing). Walnut shells or the like crushed to a size of -10 mesh to +30 mesh are suitable.

Example 1

A blend was prepared of 75 parts by weight of copper flakes of 99% minus 325 mesh having a surface area of 0.65 m²/gm (by the BET method) and 25 parts by weight of a thermoplastic, heat-curable epoxy powder, VEDOC(TM) VE-101-A sold by Ferro Corporation, 4150 E. 56 Street, Cleveland, Ohio, of 30 to 40 micron average size. The volume loading was approximately 50% each of copper and epoxy. A polyvinylpyrrolidone (PVP) binder solution containing 100 parts by volume of PVP, and 700 parts of water was prepared separately. Approximately 40 cc of this solution was added to 400 gms of the copper-epoxy blend. The mixture was slowly added and mixed thoroughly, and the mixing continued until the binder dried, leaving a fairly free-flowing powder. The powder was warmed to about 250°F. to ensure complete drying. The powder was then screened and handmilled to reduce the same to a -120 +325 mesh powder. The powder so formed comprised particles of the copper and epoxy. The composite powder was screened to a size of -170 mesh to 10 microns.

The composite powder of copper flake and epoxy was thermal sprayed with a conventional combustion type gun of the general type disclosed in U.S. Patent No. 3,443,754 and sold by Metco as Type 6P. The nozzle used is shown in the drawing. The nozzle 10 on the Type 6P Gun (not shown) includes an axial powder conduit 12 where powder is entrained in nitrogen carrier gas. Sixteen burner jets (one shown at 14) are equally spaced in a ring coaxial to conduit 12. Between the ring of jets and the conduit, and coaxial therewith, is an annular passage 16 communicating with an annular manifold 18 formed with a ring 20 pressed into nozzle 10. Compressed air is supplied to the manifold 10 through sixteen ducts (one shown at 22) arcuately spaced between jets 14. Further air is aspirated and entrained through sixteen holes (one shown at 24), also spaced between jets 14.

Spray parameters were: Propane gas at 1.7 bar (25 psi) and 260 l/hr (9.1 scfh), oxygen at 1.7 bar (25 psi) and 440 l/hr (15.5 scfh), compressed air at 4 bar (30 psi), nitrogen carrier gas for the powder at 425 l/hr (15 scfh), spray distance 16 cm, spray rate 5.4 kg/hr (12 lbs/hr). Deposit efficiency was about 80%, compared to 20% to 30% for a simple blend of +325 mesh copper powder (having a surface area of 0.09 m²/gm) with 60% by volume epoxy powder. No apparent thickness limit was evident; coatings 0.15 to 3.2 cm (.015 to .020 inches) thick were sprayed, typically. As sprayed surface finish was between 400 and 600 microinches, and light sanding produced 100 to 200 microinches.

A gelcoat layer on a fiberglass boat bottom was prepared by surface blasting with crushed walnut shells of size between about -10 and +30 mesh with compressed air at 6.2 bar (90 psi) pressure with a nozzle of 11 mm diameter. The composite powder of the example was thermal sprayed as set forth above onto the prepared surface . An excellent, well bonded copper-containing antifouling coating 0.5 mm thick was produced.

Example 2

A powder containing copper flake similar to that of Example 1 was produced using, in place of the epoxy powder, a 50:50 (by weight) blend of epoxy and polyamide powders. The epoxy was as in Example 1. The polyamide was nylon 11 of similar size, sold as Rilsan 11 ES15-10 sold by Rilsan Corp., 139 Harristown Road, Glen Rock, NJ 07452. Similar antifouling coatings were obtained.

While the invention has been described above in detail with reference to specific embodiments, various changes and modifications which fall within the spirit of the invention and scope of the appended claims will become apparent to those skilled in this art. The invention is therefore only intended to be limited by the appended claims or their equivalents.

Claims

1. A composite thermal spray powder for producing antifouling coatings on an underwater surface of a marine structure, comprising granules formed of heat-softenable resin and a pulverant mineral toxic to marine organisms.

2. A composite thermal spray powder according to Claim 1 wherein the resin is present in an amount between about 10% and about 70% by volume based on the total of the mineral and the resin.

3. A composite thermal spray powder according to Claim 1 wherein the granules have a size generally between -100 mesh and +5 microns.

4. A composite thermal spray powder according to Claim 3 wherein the resin is in the form of particles and the pulverant mineral and the resin particles are bonded together with an organic binder to form the granules.

5. A composite thermal spray powder according to Claim 4 wherein the resin particles have a size generally between -325 mesh and +1 micron.

6. A composite thermal spray powder according to Claim 1 wherein the pulverant mineral has a size less than 325 mesh and a specific surface area greater than 0.05 m²/gm.

7. A composite thermal spray powder according to Claim 6 wherein the pulverant mineral is in the form of flakes.

8. A composite thermal spray powder according to Claim 1 wherein the resin comprises an organic material selected from the group consisting of epoxy, polyester, polyimide, polyamide and combinations thereof, and the mineral is selected from the group consisting of copper, copper alloys, copper oxide and combinations thereof.

9. A composite thermal spray powder according to Claim 8 wherein the resin comprises approximately equal amounts by weight of epoxy and polyamide.

10. A composite thermal spray powder according to Claim 8 wherein the mineral comprises copper-nickel alloy containing at least 65% by weight copper based on the alloy.

11. A composite thermal spray powder according to Claim 1 wherein the pulverant mineral consists essentially of copper in the form of flakes and the resin comprises epoxy and is present in an amount between about 40% and 50% by volume based on the total of the copper and the epoxy.

12. A composite thermal spray powder for producing antifouling coatings on an underwater surface of a marine structure, comprising granules of size generally between -170 and +325 mesh formed of heat-softenable epoxy particles and polyamide particles and copper flakes bonded together with an organic binder, the particles and the flakes having a size generally between -325 mesh and +1 micron, and the epoxy and the polyamide each being present in an amount between about 20% and about 25% by volume based on the total of the copper, the epoxy and the polyamide.

13. A process for producing antifouling coatings on a marine surface to be exposed underwater, comprising thermal spraying a composite powder of granules formed of heat-softenable resin and a pulverant mineral toxic to marine organisms.

14. A process according to Claim 13 wherein the pulverant mineral has a size less than 325 mesh and a specific surface area greater than 0.05 m²/gm.

15. A process according to Claim 14 wherein the granules have a size generally between -100 mesh and +5 microns, and the resin is in the form of particles bonded together with the pulverant mineral with an organic binder to form the granules, the resin particles and the pulverant mineral each having a size generally less than 325 mesh, the resin being present in an amount between about 10% and about 70% by volume based on the total of the mineral and the resin and comprising an organic material selected from the group consisting of epoxy, polyester, polyimide, polyamide and combinations thereof, and the pulverant mineral having a surface area greater than 0.05 m²/gm and being selected from the group consisting of copper, copper alloys, copper oxide and combinations thereof.

16. A process according to Claim 15 wherein the pulverant mineral consists essentially of copper in the form of flakes and the resin comprises epoxy and is present in an amount between about 40% and 50% by volume based on the total of the copper and the epoxy.

17. A process according to Claim 16 wherein the resin further comprises polyamide in an amount approximately equal to the amount of epoxy.

18. A process according to Claim 13 wherein the marine surface is a surface of a gelcoat layer of a fiberglass-plastic laminate and the thermal spraying is preceded by the step of grit blasting the surface.

19. A process according to Claim 18 wherein the grit blasting comprises propelling granules of an organic hard material having a vickers hardness greater than about 25 toward the surface with compressed air.

20. A process according to Claim 13 wherein the marine structure surface is metallic, and the thermal spraying is preceded by the step of applying to the metallic surface a substantially impervious layer of organic-based paint.

21. A marine structure having an underwater surface coated by the process of Claim 13 or 14 or 15 or 16 or 17.

22. A fiberglass-resin marine structure with a gelcoat surface for underwater exposure coated by the process of Claim 18 or 19.

23. A metallic marine structure with a surface for underwater exposure having a layer of substantially impervious organic paint coated by the process of Claim 20.

| **DOCUMENTS CONSIDERED TO BE RELEVANT** | | | EP 87110019.4 |
|---|---|---|---|
| Category | Citation of document with indication, where appropriate, of relevant passages | Relevant to claim | CLASSIFICATION OF THE APPLICATION (Int. Cl.4) |
| D,X | US - A - 4 388 373 (LONGO et al.) <br> * Claims; column 1, line 67 - column 2, line 7; column 3, lines 10-18; examples * <br> -- | 1-19 | C 09 D 5/16 <br> C 09 D 5/46 <br> C 09 D 5/03 |
| A | DERWENT ACCESSION No. 85-212 471 Questel Telesystemes (WPIL) <br> * Abstract * <br> & JP-A-60-015 150 (NIPPON STEEL CORP.) <br> -- | 1 | |
| P,A | DERWENT ACCESSION No. 86-178 523 Questel Telesystemes (WPIL) <br> * Abstract * <br> & JP-A-61-110 545 (KAWASAKI STEEL KK) <br> ---- | 1 | |
| | | | **TECHNICAL FIELDS SEARCHED (Int. Cl.4)** <br> C 09 D <br> C 23 C 4/00 |

The present search report has been drawn up for all claims

| Place of search | Date of completion of the search | Examiner |
|---|---|---|
| VIENNA | 09-10-1987 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82